# EUROPÄISCHE PATENTSCHRIFT

(11) **EP 2 236 071 B1**
(45) Veröffentlichungstag und Bekanntmachung des Hinweises auf die Patenterteilung: **02.11.2016**
(21) Anmeldenummer: 10155861.7
(22) Anmeldetag: 09.03.2010
(51) Int. Cl.: A47L 9/12, A47L 7/04, A47L 9/00, D06F 58/22, B01D 47/16, F24C 15/20, B01D 46/00, B01D 53/00

(54) **Elektrisches Haushaltsgerät mit Zusatzvorrichtung**
Electrical household device with additional device
Appareil électroménager doté d'un dispositif supplémentaire

(30) Priorität: 31.03.2009 DE 102009002049
(43) Veröffentlichungstag der Anmeldung: 06.10.2010
(73) Patentinhaber: BSH Hausgeräte GmbH, 81739 München (DE)
(72) Erfinder: Böck, Armin, 97633 Grossbardorf (DE); Dockner, Daniel, 81827 München (DE); Hacker, Karin, 80634 München (DE)

(56) Entgegenhaltungen:
- EP-A1- 1 210 966
- EP-A1- 1 424 032
- WO-A1-2005/051155
- DE-A1- 4 240 172
- DE-A1- 19 709 061
- DE-U1- 9 317 809
- US-A- 6 090 184

## Beschreibung

### Hintergrund der Erfindung

Die vorliegende Erfindung betrifft ein elektrisches Haushaltsgerät mit einer Zusatzvorrichtung, die zumindest einen Zusatzstoff aufweist, der in eine, mit der Zusatzvorrichtung in Kontakt stehende Luft, abgebbar ist. Dabei weist der Zusatzstoff Einschlussverbindungen auf, in die in der Luft enthaltene Geruchspartikel aufnehmbar sind. Das Haushaltsgerät weist eine Motor-Gebläse-Einheit zur Erzeugung eines Luftstroms sowie ein Motorschutzfilter auf. Zudem ist eine Partikelrückhaltevorrichtung vorhanden, um dem Luftstrom Partikel zu entnehmen, wobei die Zusatzvorrichtung in Richtung des Luftstroms der Partikelrückhaltevorrichtung nachgelagert ist.

### Stand der Technik

Aus dem Stand der Technik ist beispielsweise die Deutsche Offenlegungsschrift DE 10 2004 009 956 A1 bekannt, bei der ein Adsorbens für Staubsammelfilter, insbesondere zur Geruchsadsorption, offenbart ist. Diese Schrift schlägt vor, dass das Adsorbens aus Fasern und/oder Flocken als Trägermaterial besteht, auf die ein pulverförmiges Adsorptionsmaterial aufgebracht ist. Als Adsorptionsmaterial ist neben pulverförmiger Aktivkohle auch funktionalisierter Kohlenstoff in Form eines aromatischen Kohlenstoffgerüstes mit funktionellen Gruppen beschrieben. Ein derartiges Adsorbens ist unter der Bezeichnung Carbonized Basal Plates (CBP) bekannt geworden. Unter den Betriebsbedingungen liegt das Adsorbens im Staubsammelfilter aufgewirbelt vor, und mischt sich dadurch homogen mit dem Staub. Dadurch, dass eine relativ große äußere Oberfläche vorhanden ist, wird eine optimale Ausnutzung erreicht. Wenn der Staubsammelfilter von Luft durchströmt wird, kann das Adsorbens aufgewirbelt und in Zirkulation gehalten werden. Das Adsorbens wird von vornherein in loser Form in dem abgeschlossenen Staubsammelraum eingefüllt. Das Adsorbens kann aber auch in einem Beutel mit luftdurchlässiger Umhüllung im Staubsammelraum vorliegen.

Weiter ist aus der Deutschen Offenlegungsschrift DE 10 2005 016 274 A1 ein Verfahren zur Geruchsneutralisation für Räume und eine Vorrichtung zur Reinigung von Räumen, die mit einer Geruchsneutralisationsmittelquelle versehen ist, bekannt. In einem dargestellten Ausführungsbeispiel dieser Erfindung werden einige Tropfen flüssigen speziellen Geruchsneutralisationsmittels in das Polster eines sogenannten Mikrofilters eines herkömmlichen Staubsaugers eingebracht, um das Geruchsneutralisationsmittel in die Raumluft zu blasen, damit das Geruchsneutralisationsmittel dort unangenehme Gerüche neutralisiert. Das Geruchsneutralisationsmittel kann auch in anderen als flüssiger Form in den Mikrofilter eingebracht werden, und kann auch mit Duftstoffen angereichert werden. In dieser Offenlegungsschrift sind die Geruchsneutralisationsmittel nicht näher dargelegt.

Die Patentanmeldung EP 1 210 966, welche dem Oberbegriff des unabhängigen Anspruchs 1 entspricht, beschreibt Gasfiltermaterialien, wie sie beispielsweise in Staubsaugerfilterbeuteln und Staubsaugerabgasfiltern Verwendung finden können. Solche Gasfiltermaterialien enthalten bezogen auf das Flächengewicht des Gasfiltermaterials 0,01 bis 60 Gew.-% makrocyclische organische Käfigverbindungen.

Die Offenlegungsschrift DE 42 40 172 A1 beschreibt einen Staubsauger mit einem Staubfilterbeutel und einem separaten Feinstaub- oder Hygienefilter im Abluftstrom des Sauggebläses. Dabei ist das Feinstaubfilter in einem am Staubsauger vorgesehenen Filterkassettenraum auswechselbar angeordnet und ein- oder mehrlagig ausgebildet. Das Hygienefilter hat eine zickzackförmig, mäanderförmig oder dergleichen gefaltete Form, wobei die durch den Faltvorgang gebildeten Zwischenräume zumindest auf einer Filterseite ganz oder teilweise mit einem geruchbindenden Filtermaterial gefüllt sind. Das Filtermaterial kann granulat- oder pulverförmig sein, vorzugsweise wird Aktivkohle verwendet.

Das US-Patent US 6 090 184 A offenbart einen Staubsauger mit einem Filter, das so gestaltet ist, dass es unerwünschte Gase aus der Luft entfernen kann. Das Filter umfasst eine Fasermatte, wobei die Fasern in alle Richtungen der Matte ausgerichtet sind. Diese Fasern sind vorzugsweise Zellulosefasern oder synthetische Textilfasern. Ein synthetisches Bindemittel ist auf die Fasern aufgebracht. Ein absorbierendes Pulver, vorzugsweise in Partikelform, ist auf dem Bindemittel angebracht. Als absorbierendes Pulver können eine Vielzahl von Pulvern, wie zum Beispiel Holzkohle, Kieselgur oder Walkerde verwendet werden.

Des Weiteren betrifft die Druckschrift DE 197 09 061 A1 einen Luftfilter, insbesondere für staubbeladene Luft eines Staubsaugers auf Basis von Aktivkohle. Um den Luftfilter der in Rede stehenden Art derart verbessert auszugestalten, dass ein qualitativ unangenehmer Charakter, der aus dem Luftfilter noch austretenden Geruchsstoffe, positiv beeinflusst wird, wird vorgeschlagen, in dem Filter unterschiedliche Arten von Aktivkohle vorzusehen, sodass das Adsorptions-Spektrum hinsichtlich bestimmter Geruchsstoffe unterschiedlich ist.

### Der Erfindung zugrundeliegende Aufgabe

Der Erfindung liegt die Aufgabe zugrunde, ein gegenüber dem Stand der Technik verbessertes elektrisches Haushaltsgerät bereitzustellen. Insbesondere soll ein elektrisches Haushaltsgerät bereitgestellt werden, das Gerüche vernichten und somit die Luftqualität in einem Raum erhöhen kann. Weiter soll ein Mittel zur Geruchsbekämpfung möglichst universell in dem elektrischen Haushaltsgerät einsetzbar sein.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch ein Haushaltsgerät mit den Merkmalen des Anspruchs 1.

Unter einem elektrischen Haushaltsgerät ist ein Gerät, das üblicherweise in einem Privathaushalt benutzt wird und das einen elektrischen Verbraucher besitzt, zu verstehen. Darunter fallen beispielsweise Küchengeräte wie Fritteusen, Herde oder Kühlschränke. Unter einer Zusatzvorrichtung ist eine Vorrichtung zu verstehen, die an oder in dem elektrischen Haushaltsgerät angeordnet ist. Hierbei kann die Zusatzvorrichtung fest oder abnehmbar mit dem elektrischen Haushaltsgerät verbunden sein. Durch eine abnehmbare Zusatzvorrichtung kann erreicht werden, dass diese leicht durch den Benutzer ausgetauscht werden kann. Üblicherweise ist das elektrische Haushaltsgerät von Luft, die z. B. eine Umgebungsluft sein kann, umgeben. Diese Luft steht dann mit der Zusatzvorrichtung in Kontakt, wenn die in der Zusatzvorrichtung enthaltenen Zusatzstoffe in diese Luft abgegeben werden können. Dies kann z. B. dann erfolgen, wenn die Luft die Zusatzvorrichtung umgibt, an der Zusatzvorrichtung vorbeiströmt und diese dabei streift oder wenn die Luft durch die Zusatzvorrichtung hindurchströmt.

Unter Einschlussverbindungen sind chemische Verbindungen zu verstehen die in Hohlräumen ihres Gitters eine Gastkomponenten aufnehmen und/oder einschließen können. Gewöhnlich kann das Gitter der Einschlussverbindung ein Kristallgitter sein. Natürlich sind aber auch andere Gitterformen denkbar. Eine Einschlussverbindung kann also ein Molekül sein, dessen Atome so in einem Gitter angeordnet sind, dass Hohlräume innerhalb des Gitters entstehen. Bei Einschlussverbindungen, in die Geruchspartikel aufnehmbar sind, können Partikel, also Geruchspartikel, in den Hohlräumen des Gitters eingelagert werden, wodurch diese von dem Menschen nicht mehr wahrnehmbar sind. Die Geruchspartikel können so wirksam bekämpft werden. Die Einschlussverbindung kann somit als wirksames Mittel zur Geruchsbekämpfung eingesetzt werden. Besonders vorzugsweise werden die Geruchspartikel in den Hohlräumen physikalisch festgehalten, z. B. durch Van-der-Waals-Kräfte. Von dieser Art, Geruchspartikel aufzunehmen, ist die Adsorption von Geruchspartikeln zu unterscheiden, da bei der Adsorption Partikel sich an der Oberfläche eines Stoffes anreichern und dort haften bleiben. Dies kann natürlich ebenfalls durch physikalische Kräfte erfolgen. Erreichbar kann die Adsorption von Geruchspartikeln durch den Einsatz von sogenannten Adsorbenz-Stoffen, wie z. B. Aktivkohle, sein. Außerdem ist von der oben genannten Art, Geruchspartikel in Einschlussverbindungen aufzunehmen, die chemische Veränderung von Geruchspartikeln, wie z.B. durch Ozon zu unterscheiden.

Das erfindungsgemäße elektrische Haushaltsgerät weist einen Motor auf. Bei einem motorbetriebenen Haushaltsgerät, z. B. einem Kaffeevollautomaten, kann sich die erfindungsgemäße Zusatzvorrichtung als besonderer Vorteil erweisen, da von einem motorbetriebenen Haushaltsgerät eine erhöhte Emission von Geruchspartikel ausgehen kann. Ein weiteres erfindungsgemäß bevorzugtes Haushaltsgerät weist eine Motor-Gebläseeinheit zur Erzeugung eines Luftstroms auf. Üblicherweise werden Haushaltsgeräte mit einer Motor-Gebläseeinheit, z. B. Ventilatoren zur Be- oder Entlüftung von Räumen eingesetzt. Besonders vorzugsweise ist die Zusatzvorrichtung in dem Luftstrom angeordnet. Es ist hierbei ein erreichbarer Vorteil, dass der Zusatzstoff wirksamer und schneller mit der Luft vermischt und/oder in der Luft verteilt werden kann. Weiter kann durch die Erzeugung eines Luftstroms mehr Luft in gleicher Zeit mit dem Zusatzstoff in Kontakt kommen, wodurch mehr Geruchspartikel in der gleichen Zeit bekämpft werden können.

In dem erfindungsgemäßen Haushaltsgerät ist ferner eine Partikelrückhalteeinrichtung angeordnet ist, um dem Luftstrom Partikel zu entnehmen. Hierbei sind unter Partikeln sowohl feste Partikel als auch flüssige und/oder gasförmige Partikel zu verstehen. Besonders vorzugsweise werden dem Luftstrom feste und/oder gasförmige Partikel entnommen. Dies kann insbesondere bei Staubsaugern, Luftwäschern, Luftreinigern, Dunstabzügen/Essen, Backöfen und/oder Luftentfeuchtern wie z.B. Wäschetrockner oder Geschirrspüler zur Anwendung kommen. Die dem Luftstrom entnommenen Partikel können dabei besonders vorzugsweise in der Partikelrückhalteeinrichtung angesammelt werden, die hierzu besonders vorzugsweise von dem Luftstrom durchströmt wird. Marktanalysen und Kundenbefragungen ergaben, dass Kunden Luft, in der sie nach einem Filterungsvorgang eines Haushaltsgeräts noch Gerüche wahrnehmen können, die somit also noch Geruchspartikel enthält, nicht als gereinigte Luft empfinden, und ein Gerät bei dem nach einem Filterungsvorgang geruchspartikelhaltige Luft entströmt, als mangelhaft wahrnehmen. Die Erwartung des Kunden ist also, eine sowohl von Partikeln als auch von Geruchspartikeln gereinigte Luft zu erhalten. Es stellt sich hierbei als vorteilhaft heraus, die Reinigung von Luft von Partikeln mit einer Reinigung der Luft von Geruchspartikeln zu kombinieren. Die durch das elektrische Haushaltsgerät erzielte Reinigungswirkung kann durch den Einsatz des erfindungsgemäßen Zusatzstoffes verbessert werden, wodurch die Zufriedenheit des Benutzers erhöht werden kann. Besonders vorzugsweise ist die Zusatzvorrichtung mit der Partikelrückhalteeinrichtung verbunden, sodass ein Austausch von Partikelrückhalteeinrichtung und Zusatzvorrichtung gleichzeitig durch den Benutzer ermöglicht werden kann. Da der Luftstrom nicht frei von Partikeln sein muss, um Geruchspartikel zu modifizieren, kann selbst bei defekter Partikelrückhalteeinrichtung eine effektive Bekämpfung von Gerüchen durch die Zusatzvorrichtung gegeben sein.

Erfindungsgemäß ist vorgesehen, dass die Zusatzvorrichtung in Richtung des Luftstroms der Partikelrückhalteeinrichtung nachgelagert ist. Hierdurch kann erreicht werden, dass der Luftstrom zuerst von Partikeln und anschließend von Geruchspartikeln befreit wird. Somit ist die Anzahl an Partikeln, die mit dem Zusatzstoff in Verbindung kommen, stark reduziert, sodass der Zusatzstoff hauptsächlich mit Geruchspartikeln in Verbindung kommen kann, um diese zu modifizieren. Hierdurch kann eine besonders effektive Wirkung des Zusatzstoffes erzielt werden.

Zudem ist es bei dem erfindungsgemäßen Haushaltsgerät vorgesehen, dass die Zusatzvorrichtung in Richtung des Luftstroms der Motor-Gebläseeinheit vorgelagert ist. Besonders vorzugsweise ist die Motor-Gebläseeinheit in dem elektrischen Haushaltsgerät angeordnet. Es sind natürlich auch Ausführungen der Erfindung denkbar, in denen die Motor-Gebläseeinheit außerhalb des Haushaltsgerätes angeordnet ist. Bei einer der der Motor-Gebläseeinheit in Richtung des Luftstroms vorgelagerten Zusatzvorrichtung kann die Zeitdauer, in der der Zusatzstoff auf Geruchspartikel treffen und auf diese einwirken, verlängert werden. Somit können mehr Geruchspartikel bekämpft werden, wodurch die Wirkung des Zusatzstoffes erhöht werden kann. Zudem besteht eine gemeinsame Baugruppe aus der Zusatzvorrichtung und einem Motorschutzfilter.

Es ist ein erreichbarer Vorteil des erfindungsgemäßen Haushaltsgeräts sowie des erfindungsgemäßen Verfahrens, dass Geruchspartikel von dem erfindungsgemäßen Zusatzstoff physikalisch absorbiert werden können, also von dem Zusatzstoff aufgenommen oder umschlossen werden können, um diese zu modifizieren. Somit ist erreichbar, dass Geruchspartikel für den Menschen nicht mehr wahrnehmbar sind, um eine effektive Geruchsbekämpfung ermöglichen zu können. Mit dem erfindungsgemäßen elektrischen Haushaltsgerät ist erreichbar, dass üble Gerüche in Wohnräumen verringert oder sogar vernichtet werden können. Daher kann durch die Erfindung eine deutlich höhere Luftqualität in einem Raum, beispielsweise in einem Wohnraum, erzielt werden. Weiter können selbst die von dem elektrischen Haushaltsgerät selbst emittierten Gerüche minimiert und/oder vernichtet werden. Dies kann sich als Vorteil bei elektrischen Haushaltsgeräten, wie z. B. Friteusen, die starke Gerüche in hohen Mengen emittieren, erweisen. Durch die Erfindung kann eine Erhöhung der Luftqualität und somit der Lebensqualität durch Vernichtung von Gerüchen erreicht werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung sowie des erfindungsgemäßen Verfahrens weist der Zusatzstoff Käfigverbindungen mit Hohlräumen auf, wobei die in der Luft enthaltenen Geruchspartikel in den Hohlräumen einlagerbar sind. Unter Käfigverbindungen sind Verbindungen zu verstehen, bei denen Hohlräume käfigartig von den Atom- und/oder Atomgruppen der Verbindung umschlossen werden, sodass eine Gastkomponente in den Hohlräumen eingelagert werden kann. Hierbei ist eine Käfigverbindung eine besondere Form der Einschlussverbindung. Käfigverbindungen werden auch als Clathrate bezeichnet. Atome oder Moleküle der Käfigverbindung können so angeordnet sein, dass sie zumindest einen Hohlraum umschließen, und für diesen umschlossenen Hohlraum einen Käfig darstellen. Besonders vorzugsweise können einfache Molekularstrukturen, besonders vorzugsweise Geruchspartikel in die käfigartig umschlossenen Hohlräume der Käfigverbindung eingelagert werden, wobei die Geruchspartikel besonders vorzugsweise mechanisch in dem Hohlraum festgehalten werden. Dies kann z.B. durch Ausbildung von Van-der-Waals-Wechselwirkungen geschehen. Erfindungsgemäß besonders bevorzugte Käfigverbindungen sind mit der Handelsbezeichnung "SinoAir®" über die Firma "et-projekt" käuflich erwerbbar. Dieser Wirkstoff besteht in der Hauptsache aus pflanzlichen Clathraten. Um lange Betriebszeiten zu ermöglichen, wird der Wirkstoff mit ätherischen Essenzen in einem aus pflanzlichen Stoffen gewonnenem Gel zusammengeführt. Hierdurch kann sich der Einsatz bis zu einem Jahr realisieren lassen. Durch die erfindungsgemäße Verwendung von Käfigverbindungen kann sichergestellt werden, dass bei Bekämpfung von Gerüchen keine schädlichen Reaktionsprodukte und Nebenwirkungen auftreten, da es sich bei der Einlagerung der Geruchsmoleküle um einen physikalisch-biologischen Prozess handeln kann. Im Gegensatz hierzu beruht die Wirkungsweise der Aktivkohle auf Adsorption, wobei sich die Geruchspartikel an der großen inneren Oberfläche anlagern können. Die Erfindung weiterbildend ist vorzugsweise vorgesehen, dass die Zusatzvorrichtung mikroorganische Zusatzstoffe enthält. Besonders vorzugsweise enthält die Zusatzvorrichtung Bakterien und/oder andere Mikroorganismen. Hierdurch kann eine Zersetzung von Geruchsstoffen in harmlose Produkte wie z. B. Kohlendioxid und Wasser ermöglicht werden, sodass die Effizienz der Geruchsbekämpfung weiter erhöht werden kann. Natürlich sind auch Ausführungsformen denkbar, in denen die Geruchspartikel über chemische Verbindungen festgehalten werden

In einer weiteren bevorzugten Ausführungsform des Haushaltsgeräts ist der Motor-Gebläseeinheit ein Motorschutzfilter in Richtung des Luftstroms vorgelagert, und die Zusatzvorrichtung dem Motorschutzfilter in Richtung des Luftstroms vorgelagert. In einer besonders bevorzugten Ausführungsform weist das Haushaltsgerät einen Partikelraum auf, der die Partikelrückhalteeinrichtung und die Filtereinrichtung aufweist. Hierbei kann die Partikelrückhalteeinrichtung z. B. die Form eines Beutels, eines Zyklonabscheiders und/oder eines Wasserbads aufnehmen. Besonders vorzugsweise bildet die Filtereinrichtung mit dem Motorschutzfilter eine gemeinsame Baugruppe. In dieser Position in dem Haushaltsgerät kann die Zusatzvorrichtung besonders leicht durch den Benutzer ausgewechselt werden. Insbesondere kann ein einfaches Entnehmen und Austauschen der gemeinsamen Baugruppe, bestehend aus Zusatzvorrichtung und Motorschutzfilter, durch den Benutzer ermöglicht werden.

Es sind auch Ausführungsformen der Erfindung denkbar, in denen die Zusatzvorrichtung dem Motorschutzfilter in Richtung des Luftstroms nachgelagert ist. Dies kann eine besonders effektive Nutzung von freien Räumen in einer Luftführung ermöglichen. Solche freien Räume können insbesondere bei Zusammenführung des Luftstroms in Richtung einer Eintrittsöffnung in die Motor-Gebläseeinheit entstehen. Ein Einbau der Zusatzvorrichtung direkt vor die Motor-Gebläseeinheit kann eine besonders hohe Durchströmung der Zusatzvorrichtung mit Luft, und somit eine besonders effektive Wirkung des Zusatzstoffes ermöglichen.

Besonders vorzugsweise weist die Zusatzvorrichtung eine Haltevorrichtung zur Befestigung der Zusatzvorrichtung an dem Haushaltsgerät auf. Besonders vorzugsweise ist die Haltevorrichtung starr, z. B. in Form eines Rahmens oder einer Kassette, besonders vorzugsweise flexibel, in Form eines Säckchens, eine Vliesstoffes oder eines Beutels.

Die vorliegende Erfindung ermöglicht mit einfachen, konstruktiven und kostengünstigen Mitteln die Bereitstellung eines elektrischen Haushaltsgeräts, das eine effektive Geruchsbekämpfung in Wohnräumen ermöglichen kann. Insbesondere kann von dem Haushaltsgerät ein Zusatzstoff in die Luft abgegeben werden, damit Geruchspartikel von dem Zusatzstoff aufgenommen werden können, um nicht mehr als Geruch wahrgenommen zu werden. Hierzu können insbesondere Clathrate verwendet werden, die eine besonders effektive und für den Menschen unschädliche Geruchsbekämpfung ermöglichen können. Weiter kann eine Zusatzvorrichtung für das elektrische Haushaltsgerät zur Aufnahme des zur Geruchsbekämpfung verwendeten Zusatzstoffes bereitgestellt werden, die besonders universell, z. B. an verschiedene bereits in dem Haushaltsgerät angeordnete Filter, anbringbar ist.

### Kurzbeschreibung der Zeichnungen

Weitere vorteilhafte Ausgestaltungen werden nachfolgend an Hand eines in der Zeichnung dargestellten Ausführungsbeispiels, auf welches die Erfindung jedoch nicht beschränkt ist, näher beschrieben.

Es zeigt schematisch:

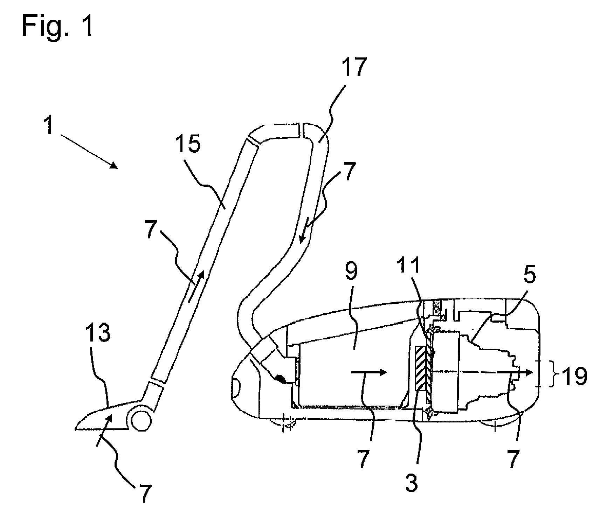

- Fig. 1: ein elektrisches Haushaltsgerät mit einer der Motor-Gebläseeinheit vorgelagerten Zusatzvorrichtung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

In dem einzigen Ausführungsbeispiel, dargestellt in Fig. 1, ist ein elektrisches Haushaltsgerät 1 in Form eines Staubsaugers mit einer Zusatzvorrichtung 3 zur Geruchsbekämpfung versehen. Das Haushaltsgerät 1 weist eine Motor-Gebläseeinheit 5 zur Erzeugung eines Luftstroms 7 auf, der zum Aufsaugen von Staubpartikeln und damit zur Bodenpflege genutzt werden kann. Hierzu weist das Haushaltsgerät 1 eine mit dem Haushaltsgerät verbundene Luftführung, bestehend aus einer Düse 13 als Luftaufnahmemittel, ein Saugrohr 15 als starres Element sowie einen Saugschlauch 17 als flexibles Element auf. Um dem Luftstrom 7 die aufgenommenen Partikel, insbesondere die Staubpartikel zu entnehmen, ist in dem Haushaltsgerät eine Partikelrückhalteeinrichtung 9 in Form eines Staubbeutels angeordnet. Um die in der Luft, die über die Düse 13 von der Motor-Gebläseeinheit 5 angesaugt wird, enthaltenen Geruchspartikel zu bekämpfen, weist die Zusatzvorrichtung 3 zumindest einen Zusatzstoff auf. Dieser Zusatzstoff ist in die durch die Zusatzvorrichtung 3 strömende Luft, die somit mit der Zusatzvorrichtung 3 in Kontakt steht, abgebbar. Der Zusatzstoff weist sogenannte Clathrate auf, die als Käfigverbindung mit Hohlräumen eine besondere Form der Einschlussverbindung darstellt, und die mit der Handelsbezeichnung "SinoAir®" über die Firma "et-projekt" käuflich erwerbbar sind. Der enthaltene Wirkstoff besteht in der Hauptsache aus pflanzlichen Clathraten. Um lange Betriebszeiten zu ermöglichen, wird der Wirkstoff mit ätherischen Essenzen in einem aus pflanzlichen Stoffen gewonnenem Gel zusammengeführt. Hierdurch kann sich der Einsatz bis zu einem Jahr realisieren lassen. Die in der Luft enthaltenen Geruchspartikel sind dabei in den Zusatzstoff aufnehmbar, wobei die Geruchspartikel in den Hohlräumen der Käfigverbindung einlagerbar sind. Aus Darstellungsgründen ist der Zusatzstoff in den Fig. nicht gezeigt.

Durch das Haushaltsgerät kann also einen Zusatzstoff, der in der Zusatzvorrichtung 3 angeordnet ist, an die durch die Zusatzvorrichtung 3 strömende Luft abgegeben werden. Da der Zusatzstoff Käfigverbindungen mit käfigartigen Hohlräumen, die eine besondere Form der Einschlussverbindung darstellt, aufweist, in die Geruchspartikel aufnehmbar sind, ist eine sehr effektive Bekämpfung von Gerüchen durch das Haushaltsgerät 1 ermöglicht.

Um die Effektivität der Geruchsbekämpfung durch den Zusatzstoff noch weiter zu erhöhen, ist die Zusatzvorrichtung 3 in Richtung des Luftstroms 7 der Partikelrückhalteeinrichtung 9 nachgelagert, wobei die Zusatzvorrichtung 3 in Richtung des Luftstroms 7 der Motor-Gebläseeinheit 5 vorgelagert ist. Dabei ist die Zusatzvorrichtung 3 einem Motorschutzfilter 11, der der Motor-Gebläseeinheit 5 in Richtung des Luftstroms 7 vorgelagert ist, in Richtung des Luftstroms 7 vorgelagert und mit diesem verbunden. Hierdurch kann ein leichtes Austauschen dieser Einheit, bestehend aus der Zusatzvorrichtung 3 und dem Motorschutzfilter 11 durch den Benutzer ermöglicht werden. Über den Zusatzstoff hinaus weist die Zusatzvorrichtung 3 einen weiteren Stoff auf, an dem Geruchspartikel bindbar sind. Aus Darstellungsgründen ist dieser weitere Stoff nicht in den Fig. gezeigt. Durch diese Maßnahme kann die Wirkungsweise der Zusatzvorrichtung 3 zur Geruchsbekämpfung weiter verbessert werden, da bereits ein Teil der Geruchspartikel durch den weiteren Stoff aufgehalten wird.

Die vorliegende Erfindung ermöglicht mit einfachen, konstruktiven und kostengünstigen Mitteln die Bereitstellung eines elektrischen Haushaltsgeräts, das eine effektive Geruchsbekämpfung in Wohnräumen ermöglichen kann. Insbesondere kann von dem Haushaltsgerät ein Zusatzstoff in die Luft abgegeben werden, damit Geruchspartikel von dem Zusatzstoff aufgenommen werden können, um nicht mehr als Geruch wahrgenommen zu werden. Hierzu können insbesondere Clathrate verwendet werden, die eine besonders effektive und für den Menschen unschädliche Geruchsbekämpfung ermöglichen können. Weiter kann eine Zusatzvorrichtung für das elektrische Haushaltsgerät zur Aufnahme des zur Geruchsbekämpfung verwendeten Zusatzstoffes bereitgestellt werden, die besonders universell, z. B. an verschiedene bereits in dem Haushaltsgerät angeordnete Filter, anbringbar ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Elektrisches Haushaltsgerät
- 3: Zusatzvorrichtung
- 5: Motor-Gebläseeinheit
- 7: Luftstrom
- 9: Partikelrückhalteeinrichtung
- 11: Motorschutzfilter
- 13: Düse
- 15: Saugrohr
- 17: Saugschlauch
- 19: Ausblasöffnung

## Patentansprüche

1. Elektrisches Haushaltsgerät (1) mit einer Zusatzvorrichtung (3), die zumindest einen Einschlussverbindungen enthaltenden Zusatzstoff aufweist, der in eine, mit der Zusatzvorrichtung (3) in Kontakt stehende Luft, abgebbar ist, wobei in der Luft enthaltene Geruchspartikel in die Einschlussverbindungen aufnehmbar sind und wobei das Haushaltsgerät (1) eine Motor-Gebläse-Einheit (5) zur Erzeugung eines Luftstroms (7) aufweist und eine Partikelrückhalteeinrichtung (9) vorhanden ist, um dem Luftstrom (7) Partikel zu entnehmen, wobei die Zusatzvorrichtung (3) in Richtung des Luftstroms (7) der Partikelrückhalteeinrichtung (9) nachgelagert ist, **dadurch gekennzeichnet, dass** die Zusatzvorrichtung (3) in Richtung des Luftstroms (7) der Motor-Gebläseeinheit (5) vorgelagert ist und die Zusatzvorrichtung (3) und ein Motorschutzfilter (11) eine gemeinsame Baugruppe bilden.

2. Elektrisches Haushaltsgerät (1) nach Anspruch 1, **dadurch gekennzeichnet, dass** der Zusatzstoff Käfigverbindungen mit Hohlräumen aufweist, wobei die in der Luft enthaltenen Geruchspartikel in den Hohlräumen einlagerbar sind.

3. Elektrisches Haushaltsgerät (1) nach Anspruch 1 oder 2, **dadurch gekennzeichnet, dass** die Zusatzvorrichtung (3) dem Motorschutzfilter (11) in Richtung des Luftstroms (7) vorgelagert ist.

## Claims

1. Electrical household device (1) having an additional apparatus (3), which has at least one additive containing inclusion compounds, which can be released into air in contact with the additional apparatus (3), where odour particles contained in the air can be absorbed in the inclusion compounds and wherein the household device (1) has a motor-fan-unit (5) for generating an airflow (7) and a particle retaining facility (9) is available, in order to remove particles from the airflow (7), wherein the additional apparatus (3) is arranged downstream of the particle retaining facility (9) in the direction of the airflow (7), **characterised in that** the additional apparatus (3) is arranged upstream of the motor-fan unit (5) in the direction of the airflow (7) and the additional apparatus (3) and a motor protection filter (11) form a shared assembly.

2. Electrical household device (1) according to claim 1, **characterised in that** the additive has clathrates with cavities, wherein the odour particles contained in the air can be stored in the cavities.

3. Electrical household device (1) according to claim 1 or 2, **characterised in that** the additional apparatus (3) is arranged upstream of the motor protection filter (11) in the direction of the airflow (7).

## Revendications

1. Appareil électroménager (1) avec un dispositif supplémentaire (3), lequel présente au moins un additif contenant des composés d'inclusion, lequel pouvant être émis dans de l'air en contact avec le dispositif supplémentaire (3), dans lequel les particules odorantes contenues dans l'air peuvent être absorbées par les composés d'inclusion et dans lequel l'appareil ménager (1) présente une unité moteur-ventilateur (5) afin de générer un écoulement d'air (7) et un dispositif de retenue des particules (9) étant présent, afin d'enlever les particules de l'écoulement d'air (7), dans lequel le dispositif supplémentaire (3) est situé en aval du dispositif de retenue des particules (9) dans le sens de l'écoulement d'air (7), **caractérisé en ce que** le dispositif supplémentaire (3) est placé en amont de l'unité moteur-ventilateur (5) dans le sens de l'écoulement d'air (7) et le dispositif supplémentaire (3) et un filtre de protection du moteur (11) constituent un module commun.

2. Appareil électroménager (1) selon la revendication 1, **caractérisé en ce que** l'additif présente des clathrates à cavités, les particules odorantes contenues dans l'air pouvant être emmagasinées dans les cavités.

3. Appareil électroménager (1) selon la revendication 1 ou 2, **caractérisé en ce que** le dispositif supplémentaire (3) est situé en amont du filtre de protection du moteur (11) dans le sens de l'écoulement d'air (7).
